# EUROPEAN PATENT APPLICATION

(11) **EP 4 524 839 A1**
(43) Date of publication of application: **19.03.2025**
(21) Application number: 24199274.2
(22) Date of filing: 09.09.2024
(51) Int. Cl.: G06Q 10/02, G06Q 30/0645, G07C 5/00, G07F 17/00

(54) **SYSTEM FOR CO-OWNING WATERCRAFT, COMPUTER, AND METHOD OF CO-OWNING WATERCRAFT**

(30) Priority: 13.09.2023 JP 2023148321
(71) Applicant: Yamaha Hatsudoki Kabushiki Kaisha, Iwata-shi, Shizuoka 438-8501 (JP)
(72) Inventor: Inoue, Hiroshi, Shizuoka, 438-8501 (JP); Sato, Tomoaki, Shizuoka, 438-8501 (JP)
(74) Representative: Grünecker Patent- und Rechtsanwälte PartG mbB

(57) **Abstract**

A system for co-owning a watercraft is a system for co-owning a watercraft having a unique watercraft ID. The system includes a computer and a communication module. The computer obtains and stores information regarding co-owning the watercraft. The communication module has a unique communication module ID. The communication module is attached to the watercraft and is configured to be communicable with the computer. The communication module stores information regarding the watercraft. The computer stores the watercraft ID and the communication module ID in association with each other. The computer is communicable with communication terminals used by co-owners each having obtained part of an ownership of the watercraft and provides a given one of the communication terminals with the information regarding the watercraft received thereby from the communication module in response to a request from the given one of the communication terminals.

## Description

The present invention relates to a system for co-owning a watercraft, a computer, and a method of co-owning a watercraft.

There has been conventionally disclosed a system for co-purchasing a merchandise such as a watercraft and then managing the co-purchased merchandise (see Japan Laid-open Patent Application Publication No. JP 2002-312625 A).

When a person co-purchases and then co-owns a watercraft with one or more others, for instance, it is concerned that management of the watercraft is made complicated. Besides, there are chances that any of the co-owners does not pay a maintenance fee for the watercraft and/or that any of the co-owners sells the watercraft without permission of the remaining co-owners. This poses a problem that the person is made reluctant to co-purchase or co-own the watercraft with one or more others.

It is an object of the present disclosure to provide a system, a computer, and a method, whereby a person is enabled to co-own a watercraft without worries.

A system for co-owning a watercraft according to an aspect is a system for co-owning a watercraft having a unique watercraft ID. The system includes a computer and a communication module. The computer obtains and stores information regarding co-owning the watercraft. The communication terminal has a unique communication module ID. The communication module is attached to the watercraft and is configured to be communicable with the computer. The communication module stores information regarding the watercraft. The computer stores the watercraft ID and the communication module ID in association with each other. The computer is communicable with communication terminals used by co-owners each having obtained part of an ownership of the watercraft and provides a given one of the communication terminals with the information regarding the watercraft received thereby from the communication module in response to a request from the given one of the communication terminals.

In the system for co-owning a watercraft according to the present disclosure, the computer stores the watercraft ID and the communication module ID in association with each other; hence, it is made possible to inhibit management of the watercraft from being made complicated. Besides, the information regarding the watercraft, received by the computer from the communication module, is provided to the given one of the communication terminals in response to the request from the given one of the communication terminals; hence, it is made possible for the co-owners to, for instance, easily grasp a usage status of the watercraft and/or information of the present position of the watercraft. Because of this, it is made possible for the co-owners to co-own the watercraft without worries.

A computer according to another aspect is used for co-owning a watercraft. The computer includes a storage portion, an association portion, and a watercraft information providing portion. The storage portion obtains and stores information regarding co-owning the watercraft. The association portion stores a unique watercraft ID and a unique communication module ID in association with each other. The unique watercraft ID is assigned to the watercraft, whereas the unique communication module ID is assigned to a communication module that is attached to the watercraft and stores information regarding the watercraft. The watercraft information providing portion provides a given one of communication terminals used by co-owners each having obtained part of an ownership of the watercraft with the information regarding the watercraft received thereby from the communication module in response to a request from the given one of the communication terminals.

A method of co-owning a watercraft according to yet another aspect is a method executed by a computer. The method includes obtaining and storing information regarding co-owning the watercraft, storing a unique watercraft ID assigned to the watercraft and a unique communication module ID assigned to the communication module that is attached to the watercraft and stores information regarding the watercraft in association with each other, and providing a given one of communication terminals used by co-owners each having obtained part of an ownership of the watercraft with the information regarding the watercraft received by the computer from the communication module in response to a request from the given one of the communication terminals.

Overall, according to the present invention, it is made possible to provide a system, a computer, and a method, whereby it is made possible for co-owners to co-own a watercraft without worries.

### BRIEF DESCRIPTION OF THE DRAWINGS

FIG. 1 is a schematic diagram showing a system for co-owning a watercraft according to a preferred embodiment.
FIG. 2 is a functional block diagram of the system for co-owning a watercraft.
FIG. 3 is a flowchart showing a configuration of processes executed in a cloud server.
FIG. 4 is a flowchart showing another configuration of processes executed in the cloud server.
FIG. 5 is a flowchart showing yet another configuration of processes executed in the cloud server.

### DETAILED DESCRIPTION OF EMBODIMENTS

A preferred embodiment will be hereinafter explained with reference to drawings. A system 1 for co-owning a watercraft is a system for co-owning a watercraft 10 assigned with a unique watercraft ID among a plurality of owners. The ownership of the watercraft 10 can be divided into predetermined shares and can be shared among the plural owners. The unique watercraft ID refers to an ID for identifying the watercraft and is, for instance, a watercraft identifying number.

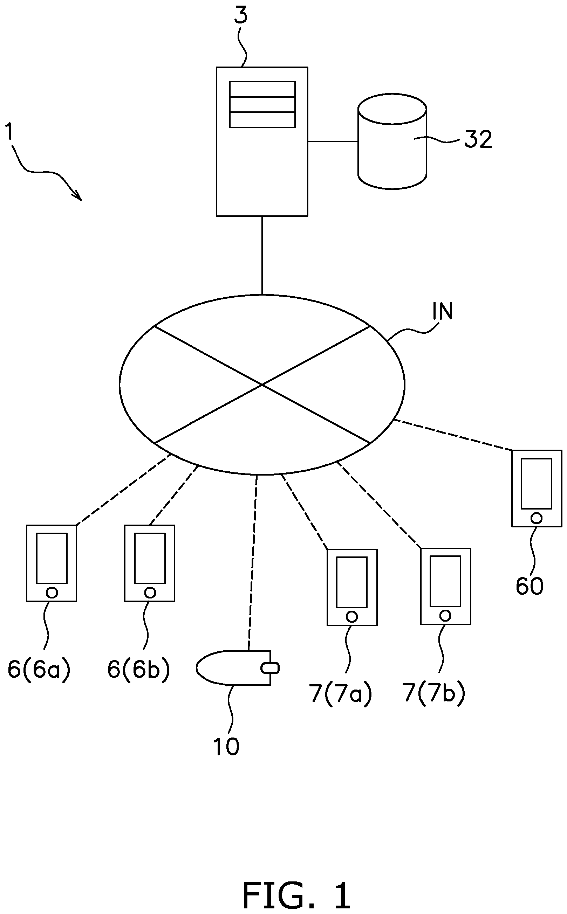

As shown in FIG. 1, the system 1 for co-owning a watercraft includes a cloud server 3 (exemplary computer) and a communication module 5.

The cloud server 3 is used for transfer (including purchase and sale) of the ownership of the watercraft 10. The cloud server 3 is used for management of the watercraft 10 and distribution of revenue obtained by rental of the watercraft 10.

The cloud server 3 is configured to be communicable with a plurality of purchase user terminals 6 and a plurality of co-ownership user terminals 7 (exemplary communication terminals) over the Internet IN. The cloud server 3 is used as a computer for managing the plural purchase user terminals 6, the plural co-ownership user terminals 7, and the watercraft 10.

The plural purchase user terminals 6 and the plural co-ownership user terminals 7 are, for instance, communication terminals such as smartphones, tablet computers, desktop computers, laptop computers, wearable terminals, and/or so forth.

The plural purchase user terminals 6 are used by users who intend to co-own the watercraft 10. The plural purchase user terminals 6 are used by users who purchase part of the ownership of the watercraft 10. In the present preferred embodiment, the plural purchase user terminals 6 include a first purchase user terminal 6a and a second purchase user terminal 6b.

The plural co-ownership user terminals 7 are used by co-owners who has obtained part of the ownership of the watercraft 10. The plural co-ownership user terminals 7 are used by users who co-own the watercraft 10. In the present preferred embodiment, the plural co-ownership user terminals 7 include a first co-ownership user terminal 7a and a second co-ownership user terminal 7b. For example, the first co-ownership user terminal 7a may be identical to the first purchase user terminal 6a. In other words, the co-owner of the watercraft 10, who has purchased part of the ownership of the watercraft 10 by using the first purchase user terminal 6a, may use the first purchase user terminal 6a as the first co-ownership user terminal 7a.

The term "information" will be used in the following explanation. The term "information" encompasses meaning of "data".

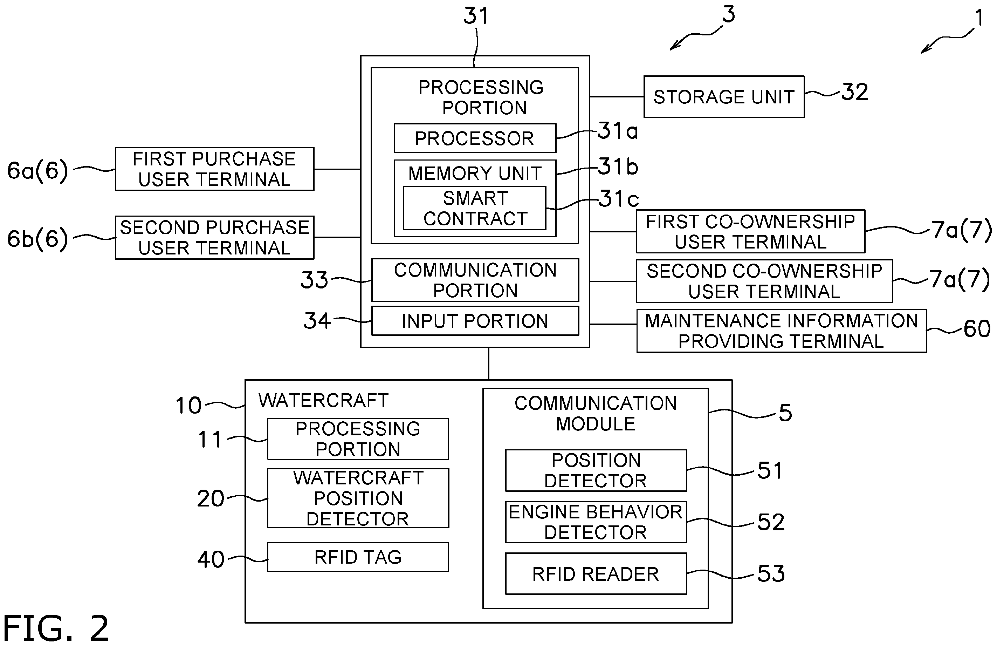

The cloud server 3 is managed by, for instance, a shipping agent. As shown in FIG. 2, the cloud server 3 includes a processing portion 31, a storage unit 32, a communication portion 33 (exemplary watercraft information providing portion), and an input portion 34.

The processing portion 31 includes a processor 31a and a memory unit 31b (exemplary storage portion). The processor 31a is, for instance, a CPU (Central Processing Unit). The processor 31a processes a variety of information based on a variety of programs recorded in the memory unit 31b.

The memory unit 31b records the variety of information to be processed by the processor 31a and the variety of programs to be executed by the processor 31a. The memory unit 31b stores a smart contract 31c for processing the transfer of the ownership of the watercraft 10. In the present preferred embodiment, the smart contract 31c is a program executed on a blockchain and automatically executes a process such as a contract when a predetermined condition is satisfied. The memory unit 31b includes a volatile memory such as a RAM (Random Access Memory) and a non-volatile memory such as a ROM (Read Only Memory).

The storage unit 32 records a variety of information and a variety of programs. The storage unit 32 includes either or both of the following storage devices: an HDD (Hard Disk Drive) and an SSD (Solid State Drive). For example, the storage unit 32 is used as a database. The storage unit 32 may be included in the processing portion 31.

The communication portion 33 receives information and signals from the plural purchase user terminals 6, the plural co-ownership user terminals 7, and the watercraft 10. The information, received by the communication portion 33 from the plural purchase user terminals 6, the plural co-ownership user terminals 7, and the watercraft 10, are recorded in the memory unit 3 1b.

The communication portion 33 provides information and signals to the plural purchase user terminals 6, the plural co-ownership user terminals 7, and the watercraft 10 in accordance with the information and signals received thereby from the plural purchase user terminals 6, the plural co-ownership user terminals 7, and the watercraft 10. The communication portion 33 retrieves, from the memory unit 3 1b, information to be transmitted to the plural purchase user terminals 6, the plural co-ownership user terminals 7, and the watercraft 10, when providing the information and signals to the plural purchase user terminals 6, the plural co-ownership user terminals 7, and the watercraft 10.

The input portion 34 receives an input from a server administrator. Information and signals inputted to the input portion 34 are recognized by the processor 31a.

The communication module 5 is a DCM (Data Communication Module). The communication module 5 is attached to the watercraft 10. The communication module 5 is configured to be communicable with the cloud server 3 over the Internet IN. The communication module 5 is configured to be communicable with the plural co-ownership user terminals 7. The communication module 5 includes a processor such as a CPU and a memory unit including memories such as a RAM and a ROM. The memory unit stores information regarding the watercraft 10.

The communication module 5 has a unique communication module ID. The communication module ID is an ID for identifying the communication module 5 and is uniquely assigned to the communication module 5.

The communication module 5 includes a position detector 51 and an engine behavior detector 52. The position detector 51 detects positional information of the communication module 5. The position detector 51 is, for instance, a GPS (Global Positioning System) receiving portion. The position detector 51 obtains the positional information of the communication module 5 from a GPS satellite. The communication module 5 transmits the positional information, obtained by the position detector 51, to the cloud server 3. The cloud server 3 receives the positional information of the communication module 5 through the communication module 5. The storage unit 32 in the cloud server 3 stores the positional information of the communication module 5. The communication module 5 transmits the positional information of the communication module 5 to the cloud server 3, for instance, in response to a request from one of the plural co-ownership user terminals 7.

The engine behavior detector 52 detects an operating state of an engine in the watercraft 10. The engine behavior detector 52 is, for instance, a sensor for detecting the rotational speed of the engine. Operating information of the engine includes time-series data regarding the rotational speed of the engine. The communication module 5 transmits the engine information, obtained by the engine behavior detector 52, to the cloud server 3. The cloud server 3 receives the engine information through the communication module 5. The communication module 5 transmits the operating information of the engine to the cloud server 3, for instance, in response to a request from one of the plural co-ownership user terminals 7.

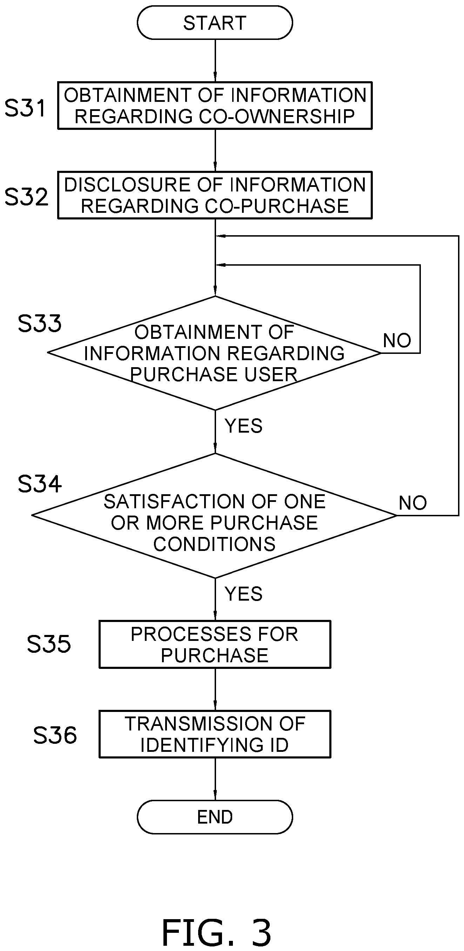

The cloud server 3 obtains and stores information regarding co-ownership of the watercraft 10 (step S31 in FIG. 3). The cloud server 3 obtains the information regarding co-ownership of the watercraft 10 by, for instance, receiving an input from the server administrator. The memory unit 31b of the processing portion 31 in the cloud server 3 stores the obtained information regarding co-ownership of the watercraft 10.

The information regarding co-ownership of the watercraft 10 includes information regarding the watercraft ID of the watercraft 10 and the communication module ID of the communication module 5. The processing portion 31 in the cloud server 3 associates the watercraft ID of the watercraft 10 and the communication module ID of the communication module 5 with each other and stores the pair of associated IDs in either the processing portion 31 or the storage unit 32. The processing portion 31 in the cloud server 3 is exemplified in part as an association portion.

The information regarding co-ownership of the watercraft 10 includes, for instance, information regarding co-owners of the watercraft 10, information regarding share ratios of respective co-owners of the watercraft 10, and information regarding rights such as a revenue right and a use right of the watercraft 10.

The information regarding co-ownership of the watercraft 10 includes information regarding co-purchase of the watercraft 10. The information regarding co-purchase of the watercraft 10 includes at least one selected from the group consisting of a service status of the watercraft 10, revenue information of the watercraft 10, and a photograph of the watercraft 10. The information regarding co-purchase of the watercraft 10 may include co-purchase conditions indicating a share available for purchase and the price thereof, an evaluation of the watercraft 10 rated by a user of the watercraft 10, a maintenance fee of the watercraft 10, the share ratios of respective co-owners of the watercraft 10, and the information regarding rights such as the revenue right and the use right of the watercraft 10. The photograph of the watercraft 10 may include a photograph of the watercraft 10 taken by a user of the watercraft 10.

The cloud server 3 executes disclosure of the information regarding co-purchase of the watercraft 10 (step S32 in FIG. 3). For example, when the cloud server 3 is provided with the information regarding co-purchase of the watercraft 10 by the input from the server administrator, the processing portion 31 in the cloud server 3 stores the provided information and executes disclosure of the information regarding co-purchase of the watercraft 10. The information regarding co-purchase of the watercraft 10 is disclosed on, for instance, a website provided by the cloud server 3.

For example, the cloud server 3 determines whether a first user using the first purchase user terminal 6a satisfies one or more purchase conditions (steps S33 and S34 in FIG. 3) when receiving the following information from the first user: information regarding the first user and information regarding a share to be purchased by the first user. When determining that the first user satisfies the one or more purchase conditions, the cloud server 3 automatically executes processes for purchase, including a process for payment and a process for transferring the ownership, by using the smart contract 31c (step S35 in FIG. 3). Likewise, the cloud server 3 determines whether a second user using the second purchase user terminal 6b satisfies the one or more purchase conditions when receiving the following information from the second user: information regarding the second user and information regarding a share to be purchased by the second user. When then determining that the second user satisfies the one or more purchase conditions, the cloud server 3 automatically executes the processes for purchase.

The cloud server 3 assigns individual identifying IDs to co-owners and provide the communication module 5 with the individual identifying IDs. For example, when the watercraft 10 is co-owned by two users (i.e., the first and second users), the cloud server 3 assigns individual identifying IDs to the first and second users, respectively, and transmits information regarding the individual identifying IDs to the communication module 5 (step S36 in FIG. 3). The communication module 5 stores the individual identifying IDs provided thereto from the cloud server 3. The individual identifying IDs, assigned to the first and second users, respectively, are stored in the communication module 5. It should be noted that, when a given user is one of the co-owners of the watercraft 10 but does not have the use right of the watercraft 10, for instance, the cloud server 3 does not provide the communication module 5 with the individual identifying ID of the given user. The following explanation will be made based on a premise that all the co-owners of the watercraft 10 (herein, the first and second users) have the use rights of the watercraft 10.

The communication module 5 is configured to be communicable with the plural co-ownership user terminals 7. When receiving, from one of the co-ownership user terminals 7, an unlock signal that serves to unlock a keylock of the watercraft 10 and includes the information regarding the individual identifying ID of the co-ownership user terminal 7, the communication module 5 executes unlocking the watercraft 10 based on the unlock signal. In the present preferred embodiment, the communication module 5 is configured to be communicable with the first and second co-ownership user terminals 7a and 7b. When receiving, from the first or second co-ownership user terminal 7a, 7b, an unlock signal that serves to unlock the keylock of the watercraft 10 and includes the information regarding the individual identifying ID of the first or second co-ownership user terminal 7a, 7b, the communication module 5 executes unlocking the watercraft 10 based on the unlock signal.

The system 1 for co-owning a watercraft includes a watercraft position detector 20 and an RFID (Radio Frequency Identification) tag 40. In the present preferred embodiment, the communication module 5 includes the watercraft position detector 20.

The watercraft position detector 20 detects watercraft positional information of the watercraft 10. The watercraft position detector 20 is, for instance, a GPS receiving portion. The watercraft position detector 20 obtains the watercraft positional information from a GPS satellite. A processing portion 11 for controlling the watercraft 10 transmits the watercraft positional information, obtained by the watercraft position detector 20, to the cloud server 3. The cloud server 3 receives the watercraft positional information, obtained by the watercraft position detector 20, through the processing portion 11 of the watercraft 10.

The RFID tag 40 is embedded in the watercraft 10. The RFID tag 40 has stored the information regarding the watercraft 10. The communication module 5 includes an RFID reader 53 capable of reading the RFID tag 40. The RFID reader 53 is capable of reading the RFID tag 40 without being touched thereto. The RFID reader 53 regularly loads the information from the RFID tag 40. The communication module 5 transmits a result of reading by the RFID reader 53 to the cloud server 3.

The cloud server 3 provides the information regarding the watercraft 10, received thereby from the communication module 5, to the first or second co-ownership user terminal 7a, 7b in response to a request from the first or second co-owner terminal 7a, 7b. The information regarding the watercraft 10 contains the positional information of the communication module 5, the operating information of the engine, the watercraft positional information of the watercraft 10, the information regarding the result of reading by the RFID reader 53, the photograph of the watercraft 10 taken by the user of the watercraft 10, and so forth.

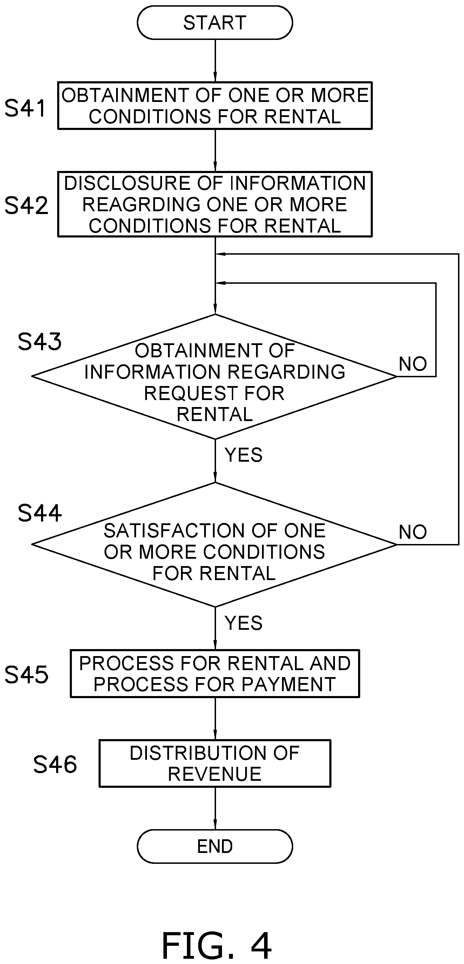

The cloud server 3 receives an input from the server administrator or one of the co-owners of the watercraft 10 and records information regarding one or more conditions for rental of the watercraft 10 (step S41 in FIG. 4). The cloud server 3 executes disclosure of the information regarding one or more conditions for rental of the watercraft 10 (step S42 in FIG. 4). The information regarding one or more conditions for rental of the watercraft 10 is disclosed on, for instance, the website provided by the cloud server 3.

When receiving information regarding a request for rental, which corresponds to a response to the information regarding one or more conditions for rental, from a user terminal of a rental user, i.e., a user intending to rent the watercraft 10, the cloud server 3 determines whether the rental user satisfies the one or more conditions for rental based on the information regarding a request for rental (steps S43 and S44 in FIG. 4). When determining that the rental user satisfies the one or more conditions for rental, the cloud server 3 automatically executes a process for rental and a process for payment by using the smart contract 31c (step S45 in FIG. 4).

After executing the process for rental of the watercraft 10, the cloud server 3 transmits the unlock signal for unlocking the keylock of the watercraft 10 to the communication module 5. The cloud server 3 receives an input from the user terminal of the rental user. When determining that the user terminal of the rental user approaches to the watercraft 10 in response to the input from the user terminal of the rental user, the cloud server 3 transmits the unlock signal to the communication module 5.

The communication module 5 executes unlocking the watercraft 10 based on the unlock signal. When receiving information regarding termination of the rental from the user terminal of the rental user, the cloud server 3 transmits a lock signal for locking the keylock of the watercraft 10 to the communication module 5. When receiving the lock signal, the communication module 5 locks the keylock of the watercraft 10 based on the lock signal.

The system 1 for co-owning a watercraft distributes the revenue obtained by the rental of the watercraft 10 to the co-owners depending on the ratios of the ownership of the watercraft 10 held by the co-owners. The cloud server 3 distributes the revenue obtained by the rental of the watercraft 10 to the co-owners depending on the ratios of the shares of the watercraft 10 held by the co-owners. For example, the cloud server 3 monthly calculates the revenue obtained by the rental of the watercraft 10. The cloud server 3 executes the distribution process based on, for instance, information regarding a distribution destination set for each co-owner such as account information stored in the storage unit 32 (step S46 in FIG. 4). The cloud server 3 may execute the distribution process whenever the revenue is obtained by the rental of the watercraft 10.

The system 1 for co-owning a watercraft includes a maintenance information providing terminal 60. The maintenance information providing terminal 60 is used by a maintenance contractor in charge of maintenance of the watercraft 10. The maintenance information providing terminal 60 is configured to be communicable with the cloud server 3. The maintenance information providing terminal 60 is, for instance, a communication terminal such as a smartphone, a tablet computer, a desktop computer, a laptop computer, a wearable terminal, or so forth. For example, the storage unit 32 in the cloud server 3 associates a maintenance ID assigned to the maintenance contractor and either the watercraft ID or the communication module ID and stores the associated IDs.

The maintenance information providing terminal 60 provides the cloud server 3 with maintenance information of the watercraft 10. The maintenance information includes information regarding the content of a maintenance work for the watercraft 10. The maintenance information includes information regarding the maintenance fee for the watercraft 10. The information regarding the maintenance fee includes information regarding fuel calibration, fuel supply, and so forth.

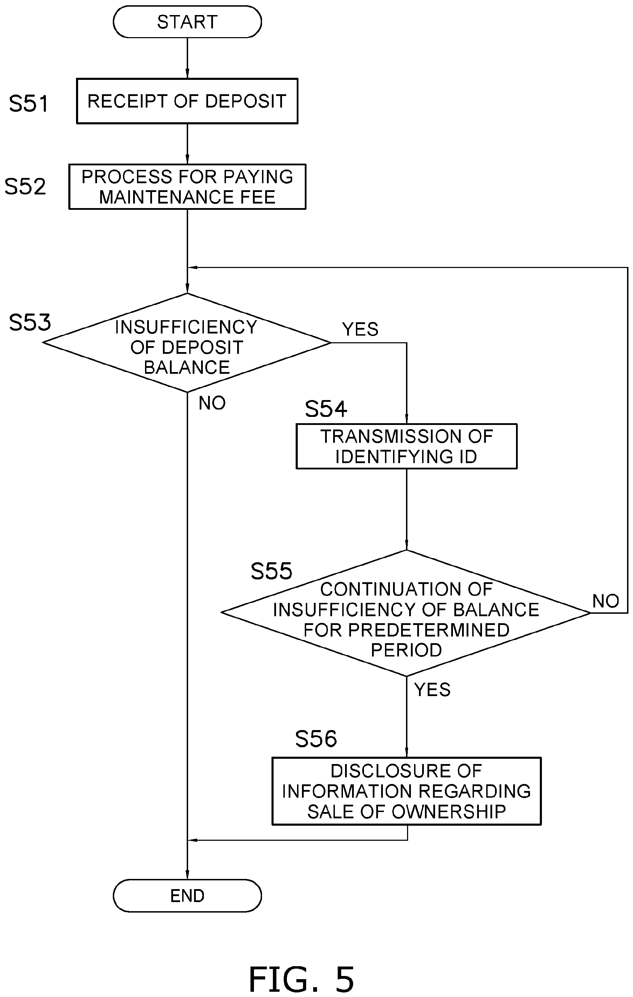

The cloud server 3 receives deposits from the co-owners of the watercraft 10 (step S51 in FIG. 5). The deposits from the co-owners of the watercraft 10 are managed by using the smart contract 31c. The cloud server 3 executes a process for paying the maintenance fee from the deposit based on the information regarding the maintenance fee provided thereto from the maintenance information providing terminal 60 (step S52 in FIG. 5).

The cloud server 3 sets allocation of the maintenance fee depending on ratios that the watercraft 10 has been used by the co-owners. For example, the cloud server 3 determines ratios of the maintenance fee to be borne by the first and second users depending on ratios that the watercraft 10 has been used by the first and second users.

The cloud server 3 monitors deposit balances (step S53 in FIG. 5). When a given co-owner has an insufficient deposit, the cloud server 3 provides the communication module 5 with the individual identifying ID of the given co-owner with the insufficient deposit (step S54 in FIG. 5). When determining that the deposit balance of the first user is less than or equal to a predetermined amount of money, for instance, the cloud server 3 provides the communication module 5 with the individual identifying ID of the first user. Besides, the cloud server 3 informs the first user of that the deposit of the first user is insufficient through the first co-ownership user terminal 7a.

The communication module 5 does not execute unlocking the watercraft 10, when receiving the unlock signal including the information regarding the identifying ID of the given co-owner with the insufficient deposit. Because of this, when the deposit balance of the first user is less than or equal to the predetermined amount of money, the first user is not allowed to unlock the watercraft 10. It should be noted that, when the first user solves insufficiency of the deposit balance, the communication module 5 clears restrictions imposed on unlocking the watercraft 10 through the cloud server 3.

The cloud server 3 executes disclosure of information regarding sale of the ownership held by the given co-owner with the insufficient deposit. When determining that the deposit balance of the first user has continued to be insufficient for a predetermined period, for instance, the cloud server 3 executes disclosure of information regarding sale of the ownership of the watercraft 10 held by the first user (step S55 in FIG. 5). With the disclosure of the information regarding the sale of the ownership of the watercraft 10 held by the first user, the cloud server 3 executes disclosure of the information regarding the co-ownership of the watercraft 10 (step S56 in FIG. 5).

For example, when receiving information regarding a third user intending to co-own the watercraft 10 and information regarding a share to be purchased by the third user from a third purchase user terminal used by the third user, the cloud server 3 determines whether the third user satisfies the one or more purchase conditions. When determining that the third user satisfies the one or more purchase conditions, the cloud server 3 automatically executes the processes for purchase, including the process for payment and the process for transferring the ownership, by using the smart contract 31c. Accordingly, the share right of the watercraft 10 held by the first user is sold to the third user, whereby the ownership of the watercraft 10 is transferred from the first user to the third user.

At this time, when the maintenance fee to be borne by the first user has not been paid yet, the cloud server 3 executes a payment process by, for instance, compensating the maintenance fee with a sales proceed obtained by selling the share right of the watercraft 10 held by the first user and then paying the first user the amount of money resulted after deduction of the maintenance fee from the sales proceed.

In the system 1 for co-owning a watercraft described above, the cloud server 3 stores the watercraft ID and the communication module ID in association with each other; hence, it is made possible to inhibit management of the watercraft 10 from being made complicated. Besides, the information regarding the watercraft 10, received by the cloud server 3 from the communication module 5, is provided to the first or second co-ownership user terminal 7a or 7b in response to the request from the first or second co-ownership user terminal 7a or 7b; hence, it is made possible for the co-owners to, for instance, easily grasp a usage status of the watercraft 10 and/or information of the present position of the watercraft 10. Because of this, it is made possible for the co-owners to co-own the watercraft without worries.

### <Other Preferred Embodiments>

The number of purchase user terminals 6 may be greater than or equal to three; likewise, the number of co-ownership user terminals 7 may be greater than or equal to three. The number of co-owners of the watercraft 10 may be greater than or equal to three.

The cloud server 3 may execute disclosure of the information regarding the sale of the ownership held by each co-owner, for instance, in response to receiving an input from the first or second co-ownership user terminal 7a, 7b.

In the preferred embodiment described above, both locking and unlocking of the keylock of the watercraft 10 are executed through the cloud server 3. However, both locking and unlocking of the keylock of the watercraft 10 may be executed by direct communication with the communication module 5 from each of the plural co-ownership user terminals 7.

### REFERENCE SIGNS LIST

3: Cloud server, 5: Communication module, 10: Watercraft, 20: Watercraft position detector, 40: RFID tag, 51: Position detector, 53: RFID reader, 60: Maintenance information providing terminal

## Claims

1. A system for co-owning a watercraft (10) having a unique watercraft ID, the system comprising:
a computer (3) configured or programmed to obtain and store information regarding co-owning the watercraft (10); and
a communication module (5) having a unique communication module ID, the communication module attached to the watercraft (10), the communication module (5) configured to be communicable with the computer (3) and store information regarding the watercraft (10), wherein
the computer (3) is configured or programmed to:
store the watercraft ID and the communication module ID in association with each other,
be communicable with communication terminals (6, 7) used by co-owners of the watercraft (10), and
provide a given one of the communication terminals (6, 7) with the information regarding the watercraft (10) received thereby from the communication module (5) in response to a request from the given one of the communication terminals (6, 7).

2. The system according to claim 1, wherein
the information regarding co-owning the watercraft (10) includes information regarding co-purchasing of the watercraft (10),
the computer (3) is configured or programmed to execute disclosure of the information regarding co-purchasing of the watercraft (10) and
wherein the information regarding co-purchasing of the watercraft (10) includes at least one selected from the group consisting of a service status of the watercraft (10), revenue information of the watercraft (10), and a photograph of the watercraft (10).

3. The system according to claim 2, wherein the information regarding co-purchasing of the watercraft (10) includes a photograph of the watercraft (10) taken by a user of the watercraft (10).

4. The system according to any one of claims 1 to 3, wherein
the computer (3) is configured or programmed to assign individual identifying IDs to the co-owners and provide the individual identifying IDs to the communication module (5), and
the communication module (5) is configured to store the individual identifying IDs provided thereto from the computer (3).

5. The system according to claim 4, wherein the communication module (5) is configured to:
be communicable with the communication terminals (6, 7), and
execute unlocking a keylock of the watercraft (10) based on an unlock signal for unlocking the keylock of the watercraft (10) when receiving the unlock signal from the given one of the communication terminals (6, 7), the unlock signal including information regarding the individual identifying ID of the co-owner of the given one of the communication terminals (6, 7).

6. The system according to any one of claims 1 to 5, wherein the computer (3) is configured or programmed to:
record information regarding a condition for rental of the watercraft (10), and
execute a process for rental of the watercraft (10) based on information regarding a request for rental when receiving the information regarding the request for rental from a user terminal (6, 7) of a user intending to rent the watercraft (10), the information regarding the request for rental corresponding to a response to the information regarding the condition for rental of the watercraft (10).

7. The system according to claim 6, wherein
the computer (3) is configured or programmed to transmit an unlock signal for unlocking a keylock of the watercraft (10) to the communication module (5) after executing the process for rental of the watercraft (10), and
the communication module (5) is configured to execute unlocking the watercraft (10) based on the unlock signal.

8. The system according to any one of claims 1 to 7, further comprising:
a maintenance information providing terminal (60) providing information regarding a maintenance fee of the watercraft (10) to the computer (3), wherein
the computer (3) is configured or programmed to:
receive deposits from the co-owners, and
execute payment of the maintenance fee from the deposits based on the information regarding the maintenance fee of the watercraft (10) provided thereto from the maintenance information providing terminal (60).

9. The system according to claim 8, wherein the computer (3) is configured or programmed to:
assign individual identifying IDs to the co-owners,
provide the individual identifying IDs to the communication module (5), and
provide the individual identifying ID of a given one of the co-owners to the communication module (5) when the given one of the co-owners has an insufficient deposit,
the communication module (5) is configured to:
be communicable with the communication terminals (6, 7),
execute unlocking a keylock of the watercraft (10) based on an unlock signal for unlocking the keylock of the watercraft (10) when receiving the unlock signal from the given one of the communication terminals (6, 7), the unlock signal including information regarding the individual identifying ID of the co-owner of the given one of the communication terminals (6, 7), and
not execute unlocking the keylock of the watercraft (10) when receiving the unlock signal including the information regarding the individual identifying ID assigned to the given one of the co-owners having the insufficient deposit.

10. The system according to any one of claims 1 to 9, wherein
the communication module (5) includes a position detector (51) detecting positional information of the communication module (5), and
the computer (3) is configured or programmed to receive the positional information through the communication module (5).

11. The system according to any one of claims 1 to 10, further comprising:
a watercraft position detector (20) detecting watercraft positional information of the watercraft (10), the watercraft position detector (20) provided in the watercraft (10), wherein
the communication module (5) is configured to obtain the watercraft positional information from the watercraft position detector (20), and
the computer (3) is configured or programmed to receive the watercraft positional information through the communication module (5).

12. The system according to any one of claims 1 to 11, further comprising:
an RFID (Radio Frequency Identification) tag (40) embedded in the watercraft (10), the RFID tag (40) configured to store the information regarding the watercraft (10), wherein
the communication module (5) includes an RFID reader (53) capable of reading the RFID tag (40).

13. The system according to claim 12, wherein the RFID reader (53) reads the RFID tag (40) on a regular basis.

14. A computer used for co-owning a watercraft (10), the computer comprising:
a storage portion (31b) configured to obtain and store information regarding co-owning the watercraft (10);
an association portion (31) configured to store a unique watercraft ID and a unique communication module ID in association with each other, the unique watercraft ID assigned to the watercraft (10), the unique communication module ID assigned to a communication module (5), the communication module (5) attached to the watercraft (10), the communication module (5) storing information regarding the watercraft (10); and
a watercraft information providing portion (33) configured to provide a given one of communication terminals (6, 7) used by co-owners of the watercraft (10) with the information regarding the watercraft (10) received thereby from the communication module (5) in response to a request from the given one of the communication terminals (6, 7).

15. A method of co-owning a watercraft, the method executed by a computer (3), the method comprising:
obtaining and storing information regarding co-owning the watercraft (10);
storing a unique watercraft ID and a unique communication module ID in association with each other, the unique watercraft ID assigned to the watercraft (10), the unique communication module ID assigned to a communication module (5), the communication module (5) attached to the watercraft (10), the communication module (5) storing information regarding the watercraft (10); and
providing a given one of communication terminals (6, 7) used by co-owners of the watercraft (10) with the information regarding the watercraft (10) received by the computer (3) from the communication module (5) in response to a request from the given one of the communication terminals (6, 7).
